(19) Europäisches Patentamt
European Patent Office
Office européen des brevets

(11) **EP 4 648 517 A1**

(12) **EUROPEAN PATENT APPLICATION**
published in accordance with Art. 153(4) EPC

(43) Date of publication:
**12.11.2025 Bulletin 2025/46**

(21) Application number: **23918972.3**

(22) Date of filing: **30.01.2023**

(51) International Patent Classification (IPC):
*H04W 72/12* (2023.01)

(52) Cooperative Patent Classification (CPC):
**H04W 72/12**

(86) International application number:
**PCT/CN2023/073908**

(87) International publication number:
**WO 2024/159382 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHOU, Mingyue
  Shenzhen, Guangdong 518129 (CN)**
• **WANG, Lei
  Shenzhen, Guangdong 518129 (CN)**
• **XU, Xiuqiang
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND DEVICE**

(57)    This application provides a communication method and apparatus. The method includes: obtaining ephemeris information; determining grant free uplink transmission configuration information based on the ephemeris information and a first correspondence; and performing uplink transmission based on the uplink transmission configuration information. Therefore, the terminal apparatus may determine the grant free uplink transmission configuration information based on the ephemeris information and the first correspondence, so that invalidation of a preconfigured grant free uplink transmission configuration can be avoided, performance of grant free uplink transmission in a non-terrestrial network can be improved, and a configuration frequency does not need to be increased.

```
┌─────────────────────────────────────┐
│  S101: Obtain ephemeris information  │
└─────────────────────────────────────┘
                   │
                   ▼
┌─────────────────────────────────────┐
│ S102: Determine dynamic grant free   │
│ uplink transmission configuration    │
│ information based on the ephemeris   │
│ information and a first              │
│ correspondence                       │
└─────────────────────────────────────┘
                   │
                   ▼
┌─────────────────────────────────────┐
│ S103: Perform uplink transmission    │
│ based on the dynamic grant free      │
│ uplink transmission configuration    │
│ information                          │
└─────────────────────────────────────┘
```

FIG. 5

EP 4 648 517 A1

**Description**

TECHNICAL FIELD

This application relates to the field of mobile communication technologies, and in particular, to a communication method and apparatus.

BACKGROUND

Non-terrestrial networks (non-terrestrial networks, NTNs) are an important part of 5th generation (5th generation, 5G) and future wireless communication networks, and are defined as networks or network segments that use a transmission device such as an airborne or spaceborne spacecraft as a relay node or a base station. Compared with a conventional terrestrial network, a major characteristic of the non-terrestrial network is that a base station is deployed in the air or space, or the base station performs signal transmission with a terminal device through a non-terrestrial device in the air or space.

The non-terrestrial network has communication characteristics of wide coverage, long distance, and high latency. It is difficult to meet a latency requirement of a service in a scheduling or grant based service transmission manner. Therefore, grant free (grant free, GF) transmission is one of conventional transmission schemes used by non-terrestrial networks in the future to reduce a transmission latency. In GF transmission, before uplink transmission, the terminal device does not need to obtain, by monitoring a grant of the base station, time-frequency resource configurations and transmission parameters used to send data, but sends data to the base station by using configurations such as preconfigured GF transmission time-frequency resources and transmission parameters.

Currently, parameters of GF transmission in a non-terrestrial network are mainly configured by a network device for a terminal device by using radio resource control (ratio resource control, RRC) signaling. However, because a non-terrestrial device in the non-terrestrial network moves at a high speed, and a transmission distance between the terminal device and the non-terrestrial device is long, it is difficult for preconfigured GF transmission parameters to be valid for a long time, and consequently GF transmission performance deteriorates.

SUMMARY

This application provides a communication method and apparatus, to improve GF transmission performance in a non-terrestrial network.

According to a first aspect, this application provides a communication method, applied to a non-terrestrial network communication system. The method may be implemented by a terminal apparatus. The terminal apparatus may be a terminal device or a component in a terminal device. The component in this application may include, for example, at least one of a chip, a chip system, a processor, a transceiver, a processing unit, or a transceiver unit. Using an example in which the execution body is the terminal apparatus, the method may be implemented through the following steps: The terminal apparatus obtains ephemeris information, and the terminal apparatus may further determine grant free uplink transmission configuration information based on the ephemeris information and a first correspondence, and perform uplink transmission based on the uplink transmission configuration information.

Based on the method shown in the first aspect, the terminal apparatus may determine the grant free uplink transmission configuration information based on the ephemeris information and the first correspondence, that is, determine a configuration used for grant free uplink transmission. Therefore, invalidation of a preconfigured grant free uplink transmission configuration can be avoided, and a network device does not need to increase a configuration frequency, so that performance of grant free uplink transmission in a non-terrestrial network can be improved.

In a possible implementation, the terminal apparatus may determine non-terrestrial device information based on the ephemeris information, where the non-terrestrial device information includes distance information and/or moment information, the distance information indicates a distance between a terminal performing uplink transmission and a non-terrestrial device, the moment information is determined based on uplink transmission moment information and reference moment information, and the reference moment information is included in the ephemeris information; and the terminal apparatus may further determine the grant free uplink transmission configuration information based on the non-terrestrial device information and the first correspondence.

Based on this implementation, the terminal apparatus may determine the distance information and/or the moment information based on the ephemeris information, and determine the grant free uplink transmission configuration information based on the distance information and/or the moment information and the first correspondence, to flexibly determine the grant free uplink transmission configuration information.

In a possible implementation, the non-terrestrial device information includes the distance information, and the terminal apparatus may query the first correspondence based on the distance information, to determine the grant free uplink transmission configuration information.

Based on this implementation, the first correspondence may include a correspondence between the distance information and the grant free uplink transmission configuration information. Optionally, for different distance information, the grant free uplink transmission configuration information determined based on the first correspondence may be different, to adapt to grant free transmission requirements at different distances.

In a possible implementation, the non-terrestrial device information includes the moment information, and the terminal apparatus may query the first correspondence based on serving beam information and the moment information, to determine the grant free uplink transmission configuration information.

Based on this implementation, the first correspondence may include a correspondence between the beam information, the moment information, and the grant free uplink transmission configuration information. Optionally, for same beam information and different moment information, the grant free uplink transmission configuration information determined based on the first correspondence may be different, to adapt to grant free transmission requirements in different beam and moment information.

In a possible implementation, the terminal apparatus may further receive the first correspondence from a network device.

Based on this implementation, the first correspondence may be configured by the network device for the terminal apparatus. The network device may include a non-terrestrial device or a terrestrial station, to implement flexible configuration.

In a possible implementation, the grant free uplink transmission configuration information includes at least one of the following: time-frequency resource location information; a modulation and coding scheme; a repetition number; a power control parameter; precoding scheme information; uplink transmission waveform information; an access scheme parameter corresponding to uplink transmission; a parameter of a preamble signal; time-frequency resource information of a preamble signal; root sequence information of a preamble signal; a subcarrier spacing; a reference signal received power threshold; a timing advance configuration; and a time alignment timer configuration.

Based on this implementation, the grant free uplink transmission configuration information can be flexibly set. Optionally, the grant free uplink transmission configuration information may include transmission parameters in grant free transmission scenarios such as grant free uplink transmission in a random access process, grant free direct data transmission, and/or small packet transmission, to adapt to a plurality of communication scenarios.

According to a second aspect, a communication apparatus is provided. The apparatus may implement the method in any one of the first aspect and the possible implementations of the first aspect.

In an optional implementation, the apparatus may include one-to-one corresponding modules that perform the methods/operations/steps/actions described in any one of the first aspect and the possible implementations of the first aspect. The module may be a hardware circuit, or software, or may be implemented by a hardware circuit in combination with software. In an optional implementation, the apparatus includes a processing unit (also referred to as a processing module sometimes) and a communication unit (also referred to as a communication module, a transceiver module, or a transceiver unit sometimes). The communication unit can implement a sending function and a receiving function. When the communication unit implements the sending function, the communication unit may be referred to as a sending unit (also referred to as a sending module sometimes). When the communication unit implements the receiving function, the communication unit may be referred to as a receiving unit (also referred to as a receiving module sometimes). The sending unit and the receiving unit may be a same functional module, and the functional module can implement the sending function and the receiving function. Alternatively, the sending unit and the receiving unit may be different functional modules, and the transceiver unit is a general term of these functional modules.

For example, when implementing the method shown in the first aspect, the apparatus may include a processing unit and a communication unit. The processing unit may be configured to: obtain ephemeris information, and determine grant free uplink transmission configuration information based on the ephemeris information and a first correspondence. The communication unit may be configured to perform uplink transmission based on the uplink transmission configuration information.

In a possible implementation, the processing unit may be configured to: determine non-terrestrial device information based on the ephemeris information, where the non-terrestrial device information includes distance information and/or moment information, the distance information indicates a distance between a terminal performing uplink transmission and a non-terrestrial device, the moment information is determined based on uplink transmission moment information and reference moment information, and the reference moment information is included in the ephemeris information; and determine the grant free uplink transmission configuration information based on the non-terrestrial device information and the first correspondence.

In a possible implementation, the non-terrestrial device information includes the distance information, and the processing unit may be configured to query the first correspondence based on the distance information, to determine the grant free uplink transmission configuration information.

In a possible implementation, the non-terrestrial device information includes the moment information, and the processing unit may be configured to query the first correspondence based on serving beam information and the moment information, to determine the grant free uplink transmission configuration information.

In a possible implementation, the communication unit may be further configured to receive the first correspondence from a network device.

In a possible implementation, the grant free uplink transmission configuration information includes at least one of the following: time-frequency resource location information; a modulation and coding scheme; a repetition number; a power control parameter; precoding scheme information; uplink transmission waveform information; an access scheme parameter corresponding to uplink transmission; a parameter of a preamble signal; time-frequency resource information of a preamble signal; root sequence information of a preamble signal; a subcarrier spacing; a reference signal received power threshold; a timing advance configuration; time alignment timer configuration; time-frequency resource location information; a modulation and coding scheme; a repetition number; power control scheme information; a power control parameter; precoding scheme information; uplink transmission waveform information; access scheme information corresponding to uplink transmission; and access parameters corresponding to uplink transmission.

For another example, the apparatus includes a processor, coupled to a memory, and configured to execute instructions in the memory, to implement the method in any one of the first aspect and the possible implementations of the first aspect. Optionally, the apparatus further includes other components, for example, an antenna, an input/output module, a transceiver, and a communication interface. These components may be hardware, software, or a combination of software and hardware.

According to a third aspect, a computer-readable storage medium is provided. The computer-readable storage medium is configured to store a computer program or instruction, and when the computer program or instruction is run, the method according to any one of the possible implementations of the first aspect is implemented.

According to a fourth aspect, a computer program product including instructions is provided. When the computer program product is run on a computer, the method according to any one of the possible implementations of the first aspect is implemented.

According to a fifth aspect, a chip system is provided. The chip system includes a logic circuit (or it may be understood as that the chip system includes a processor, and the processor may include a logic circuit and the like), and may further include an input/output interface. The input/output interface may be configured to receive a message, or may be configured to send a message. The input/output interface may be a same interface, that is, the same interface can implement both a sending function and a receiving function. Alternatively, the input/output interface includes an input interface and an output interface. The input interface is configured to implement the receiving function, that is, configured to receive a message. The output interface is configured to implement the sending function, that is, configured to send a message. The logic circuit may be configured to perform an operation other than the sending and receiving functions in any one of the first aspect and the possible implementations of the first aspect. The logic circuit may be further configured to: transmit a message to the input/output interface, or receive, from the input/output interface, a message from another communication apparatus. The chip system may be configured to implement the method in any one of the possible implementations of the first aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a sixth aspect, a communication system is provided. The communication system may include a terminal apparatus and a network device. The terminal apparatus may be configured to perform the method in any one of the first aspect and the possible implementations of the first aspect.

For technical effects achieved by the second aspect to the sixth aspect, refer to the descriptions in the first aspect. Details are not described herein again.

BRIEF DESCRIPTION OF DRAWINGS

FIG. 1 is a diagram of an architecture of a wireless communication system according to an embodiment of this application;

FIG. 2 is a diagram of an architecture of another wireless communication system according to an embodiment of this application;

FIG. 3 is a diagram of an architecture of a network device according to an embodiment of this application;

FIG. 4 is a diagram of a CG configuration process in an NTN;

FIG. 5 is a schematic flowchart of a communication method according to an embodiment of this application;

FIG. 6A is a diagram of spatial parameters of a satellite system;

FIG. 6B is a diagram of a scenario of determining GF uplink transmission configuration information based on a distance according to an embodiment of this application;

FIG. 7A is a diagram of an RTT change trend in a satellite running process;

FIG. 7B is a diagram of a relationship between a satellite beam and a service area according to an embodiment of this application;

FIG. 8 is a diagram of a structure of a communication apparatus according to an embodiment of this application;

FIG. 9 is a diagram of a structure of another communication apparatus according to an embodiment of this application; and

FIG. 10 is a diagram of a structure of another communication apparatus according to an embodiment of this application.

DESCRIPTION OF EMBODIMENTS

The following further describes this application in detail with reference to the accompanying drawings.

Embodiments of this application provide a communication method and apparatus, to reduce a location verification latency and overheads of a terminal device. The method and the apparatus in this application are based on a same technical concept. Because problem-resolving principles of the method and the apparatus are similar, mutual reference may be made to implementation of the apparatus and the method, and repeated parts are not described.

In the description of this application, terms such as "first" and "second" are used only for purposes of distinguishing descriptions, and cannot be understood as indicating or implying relative importance, or as indicating or implying a sequence.

In the description of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the description of this application, "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

The communication method provided in embodiments of this application may be applied to an NTN communication scenario. NTN communication may include networking by using a device such as an unmanned aerial vehicle, a high altitude platform station (high altitude platform station, HAPS), or a satellite, to provide services such as data transmission and voice communication for a terminal device. In addition, an NTN system may further include another aerial network device. This is not limited in this application.

Satellites may be classified into geostationary earth orbit (geostationary earth orbit, GEO) satellites, medium-earth orbit (medium-earth orbit, MEO) satellites, and low-earth orbit (low-earth orbit, LEO) satellites based on satellite altitudes, namely, orbital altitudes of the satellites. A GEO is a synchronous earth satellite orbit. Satellites running on the orbit are stationary relative to the ground. An orbital altitude of the GEO is generally 35786 kilometers (km). An LEO and an MEO are collectively referred to as non-geostationary orbits (non-geostationary orbit, NGSO). Satellites running on this type of orbits move at a high speed relative to the ground. An orbital altitude of the LEO is generally 160 km to 2000 km, and an orbital altitude of the MEO is generally 2000 km to 35786 km. For the NGSO, based on whether beams of a satellite move with the satellite, division into an earth moving cell (earth moving cell) and an earth fixed cell (earth fixed cell) may be further performed. For the earth moving cell, the cell moves relative to the ground, and a beam direction of the satellite moves with the satellite. For the earth fixed cell, the cell is fixed relative to the ground within a specific time, and an antenna of the satellite may use a beamforming capability of the antenna to fix the beam direction within a specific area of the ground within the specific time. Using an LEO satellite with an orbital altitude of 600 km as an example, a moving speed of the satellite reaches up to 7 kilometers per second (km/s) in this case. In a cell with a diameter of 100 km, a service the satellite is only several minutes.

Table 1-1 shows network parameters for LEO NTN communication.

Table 1-1

| LEO communication type<br>Parameter | Low-earth orbit satellite<br>LEO-1 | Low-earth orbit satellite<br>LEO-2 |
|---|---|---|
| Altitude (kilometer) | 600 | 1200 |
| Distance between UE and the satellite (kilometer) | 600 to 1933 | 1200 to 3600 |
| Round-trip time between the UE and the satellite (millisecond) | 4 to 12.88 | 8 to 20.87 |
| Free space loss between the UE and the satellite (decibel (dB)) | 177 to 187 | 183 to 193 |

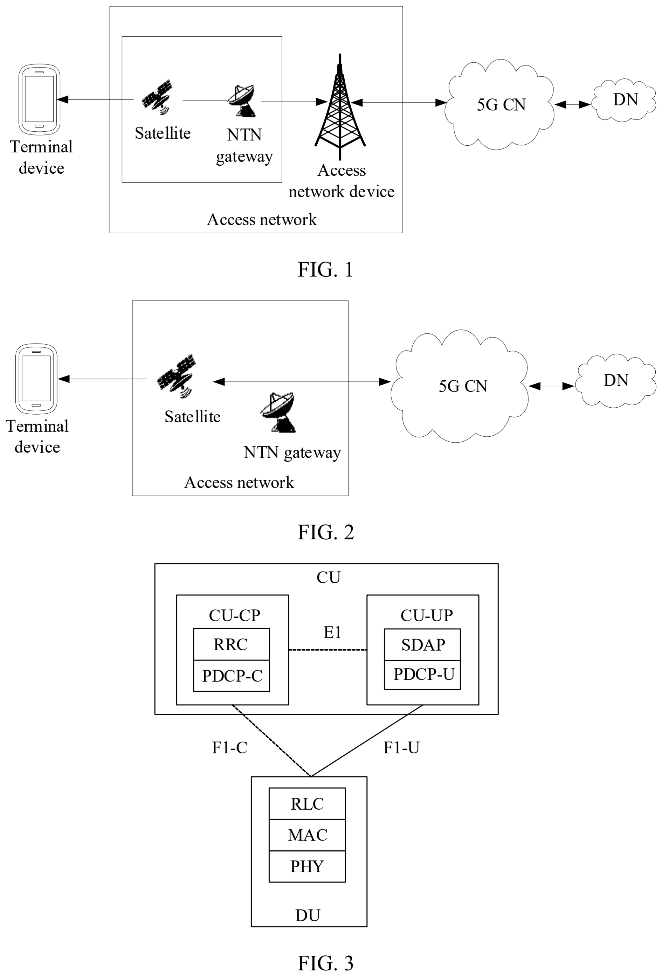

In NTN communication, working modes of an NTN device may include a transparent (transparent) mode and a regenerative (regenerative) mode. Based on the working modes of the NTN device, an architecture of NTN communication may be classified into the following two types. One is a transparent forwarding architecture. In the architecture, the NTN device may be a relay (relay) or an amplifier, and may perform radio frequency filtering, amplification, and the like, to regenerate a physical layer signal. The NTN device may be responsible for layer 1 (L1) relay, and is configured to perform physical layer forwarding, and is invisible to a higher layer. The other is a regenerative architecture. In the architecture, the NTN device has a processing function of an access network device. For example, in the regenerative working mode, the satellite may be further classified into a regenerative satellite that does not have an inter-satellite link, that is, there is no inter-satellite link (inter-satellite link, ISL) between satellites; or a regenerative satellite that has an inter-satellite link, that is, there is an interface between satellites for direct data exchange, where the inter-satellite link is an Xn interface; or a regenerative satellite that has a distributed unit (distributed unit, DU) processing function of the access network device. In this scenario, the satellite is used as a DU. For example, FIG. 1 is a diagram of an NTN scenario to which an embodiment of this application is applicable. The NTN scenario may be an application scenario of a transparent forwarding architecture. In the scenario shown in FIG. 1, a terminal device may communicate with a 5G core network (core network, CN) by using an access network, and may be further connected to a data network (data network, DN) by using the 5G CN. A satellite and an NTN gateway (gateway) may be used as a relay device between the terminal device and the access network device or as a remote radio unit (remote radio unit, RRU) of the access network device.

For example, FIG. 2 is a diagram of another NTN scenario to which an embodiment of this application is applicable. The NTN scenario may be an application scenario of a regenerative architecture. In the scenario shown in FIG. 2, a satellite may be used as an access network device, form an access network with an NTN gateway, and communicate with a core network by using the NTN gateway. In addition, the satellite may further provide a wireless access service for the terminal apparatus. FIG. 2 shows an example of a regenerative satellite architecture without an inter-satellite link.

It should be noted that, FIG. 1 and FIG. 2 show only one satellite and one NTN gateway. In actual use, an architecture with a plurality of satellites and/or a plurality of NTN gateways may be used based on a requirement. Each satellite may provide a service for one or more terminal devices. Each NTN gateway may correspond to one or more satellites. Each satellite may correspond to one or more NTN gateways. This is not limited in embodiments of this application. It should be noted that FIG. 1 and FIG. 2 are merely examples of the NTN scenario, and the NTN scenario may further include another specific scenario. This is not limited in this application.

Devices in embodiments of this application include a terminal device, an access network device, and a core network device.

The terminal device is also referred to as user equipment (user equipment, UE), a mobile station (mobile station, MS), a mobile terminal (mobile terminal, MT), or the like, and is a device that provides voice and/or data connectivity for a user. For example, the terminal device may be a hand-held device or a vehicle-mounted device that has a wireless connection function. Currently, some examples of the terminal device may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The access network device may be a radio access network (radio access network, RAN) node (or device) that connects the terminal device to a wireless network, and may also be referred to as a base station. Currently, some examples of the RAN node may be: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), a wireless fidelity (wireless fidelity, Wi-Fi) access point (access point, AP), and the like.

In addition, in a network structure, the access network device may include a central unit (centralized unit, CU) node, or a DU node, or a RAN device including a CU node and a DU node. The RAN device including the CU node and the DU node splits gNB protocol layers in an NR system, functions of some protocol layers are placed in the CU for centralized control, and functions of some or all of the remaining protocol layers are distributed in the DU, and the CU implements centralized control on the DU, as shown in FIG. 3. Further, the CU may be further divided into a control plane (CU-CP) and a user plane (CU-UP). The CU-CP is responsible for a control plane function, and mainly includes radio resource control (radio resource control, RRC) and a packet data convergence protocol (packet data convergence protocol, PDCP) that corresponds to a control plane (that is, a PDCP-C). The PDCP-C is mainly responsible for data encryption and decryption, integrity protection, data transmission, and the like of the control plane. The CU-UP is responsible for a user plane function, and mainly includes a service data adaptation protocol (service data adaptation protocol, SDAP) and a PDCP that corresponds to a user plane (that is, a PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like of the user plane. The CU-CP and the CU-UP are connected through an EI interface. The CU-CP, on behalf of the gNB, is connected to the core network through an NG interface and connected to the DU through an F1 interface control plane (namely, F1-C). The CU-UP is connected to the DU through an F1 interface user plane (namely, F 1-U). Certainly, in another possible implementation, the PDCP-C is alternatively in the CU-UP.

It may be understood that in an NTN, the access network device may be deployed on a satellite or another non-terrestrial device, or may be deployed on the ground.

The core network device is a device in a core network that provides service support for the terminal device. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal device. The SMF entity may be responsible for session management, for example, session establishment of a user. The UPF entity may be a function entity of the user plane, and is mainly responsible for connecting to an external network. It should be noted that, an entity in this application may also be referred to as a network element or a function entity. For example, the AMF entity may also be referred to as an AMF network element or an AMF function entity. For another example, the SMF entity may also be referred to as an SMF network element or an SMF function entity.

In this application, the NTN supports communication between the UE and the non-terrestrial device. The non-terrestrial device may be used as a spacecraft or a satellite that has a processing function of the access network device in the regenerative architecture, or may be used as a relay node or an amplifier that is deployed in the air or in the atmosphere and that has a processing function of the access network device in the transparent forwarding architecture. In the architecture shown in FIG. 1 or FIG. 2, the non-terrestrial device may include a satellite (or a spacecraft or the like). In the architecture shown in FIG. 1 or FIG. 2, the satellite, the NTN gateway, the access network device, the node in the 5G CN, and the node in the DN may be collectively referred to as a network device, and the NTN gateway and the access network device may be collectively referred to as a terrestrial station.

Because the non-terrestrial device is relatively far away from the ground (or the UE), a transmission latency between the non-terrestrial device and the UE is relatively large, and it is difficult for the access network device to schedule transmission of the UE in real time based on downlink control information (downlink control information, DCI). Therefore, in NTN communication, it is difficult for a grant based scheduling manner to meet a transmission latency requirement, and a grant free transmission manner becomes one of transmission schemes for reducing a transmission latency in NTN communication.

Grant free transmission may also be referred to as scheduling free transmission. One type of grant free transmission is to complete uplink data transmission in a random access process, for example, 2-step random access (2-step RA) introduced in 5G NR. Another type of grant free transmission is direct data transmission, including, for example, semi-persistent scheduling (semi-persistent scheduling, SPS) in LTE and transmission based on a preconfigured uplink resource (preconfigured uplink resource, PUR), and configured grant (configured grant, CG) transmission in 5G NR. A common characteristic of the two types of GF transmission is that before uplink transmission, the terminal device does not need to obtain, by monitoring a grant of the network device, time-frequency resources and transmission parameters that are used for sending data, but sends the data to the network device based on preconfigured GF uplink transmission configuration information. The GF uplink transmission configuration information (which may be referred to as GF transmission parameters or GF parameters for short below) may include time-frequency resources and transmission parameters used for data transmission, and is usually configured by the network device by using higher layer signaling such as system information (system information, SI) or terminal-specific (UE-specific) RRC signaling. In addition, a difference between the two types of GF transmission lies in that, in 2-step RA, the terminal device further needs to send a random access preamble (preamble) to the network device when sending data. In other words, the data of the terminal and the random access preamble are in a same uplink message, and a function of the random access preamble is to perform uplink synchronization between the terminal and a base station. However, in direct data transmission, the terminal device does not need to send a random access preamble to the network device. Therefore, direct data transmission is more applicable to a case in which uplink synchronization has been completed between the terminal device and the network device.

In addition, the 3rd generation partnership project (3rd generation partnership project, 3GPP) supports the terminal device in transmitting data, for example, small packet data, in an RRC idle state or an RRC inactive state. A corresponding transmission process may be referred to as small data transmission (small data transmission, SDT). GF transmission may include small packet transmission. In a scenario of small packet transmission, a data volume of a data packet that needs to be transmitted by the terminal device is usually quite small, and a quantity of bits of signaling that needs to be transmitted by the terminal device from the RRC idle state or the RRC inactive state to an RRC connected state is even greater than the data volume of small packet transmission. If the terminal device in the RRC idle state or the RRC inactive state is required to send the small packet data after entering the connected state, unnecessary power consumption and signaling overheads are caused. Therefore, if the terminal device is supported in directly transmitting the small packet data in the RRC idle state or the RRC inactive state, rather than transmitting the small packet data after entering the RRC connected state, signaling overheads and power consumption can be significantly reduced. For example, small packet transmission includes, for example, an instant message of an instant messaging application (application, APP), heartbeat packets or push messages of various APPs, service data of a non-smartphone, for example, accuracy data (such as a heartbeat packet) of a wearable device, periodic reading sent by an industrial wireless sensor network, or data of a device such as a smart meter.

In this application, the GF transmission parameters that may be involved in GF transmission include time-frequency resource location information, a modulation and coding scheme (modulation and coding scheme, MCS), a repetition (repetition) number, power control scheme information, a power control parameter, precoding (precoder) scheme information, uplink transmission waveform information (such as a waveform manner and corresponding parameters), an access scheme (such as orthogonal multiple access (orthogonal multiple access, OMA) and non-orthogonal multiple access (non-orthogonal multiple access, NOMA) information) corresponding to uplink transmission, and access parameters (for example, a NOMA codebook) corresponding to uplink transmission that are used in GF transmission. The following describes the GF transmission parameters with reference to the method provided in embodiments of this application. Details are not described herein.

As described above, currently, in GF transmission, the GF transmission parameters are mainly configured by the network device for the terminal device by using RRC signaling. However, because the non-terrestrial device in the non-terrestrial network moves at a high speed, and a transmission distance between the terminal device and the non-terrestrial device is long, it is difficult for the preconfigured GF transmission parameters to be valid for a long time. Consequently, performance of GF-based transmission in the non-terrestrial network is reduced.

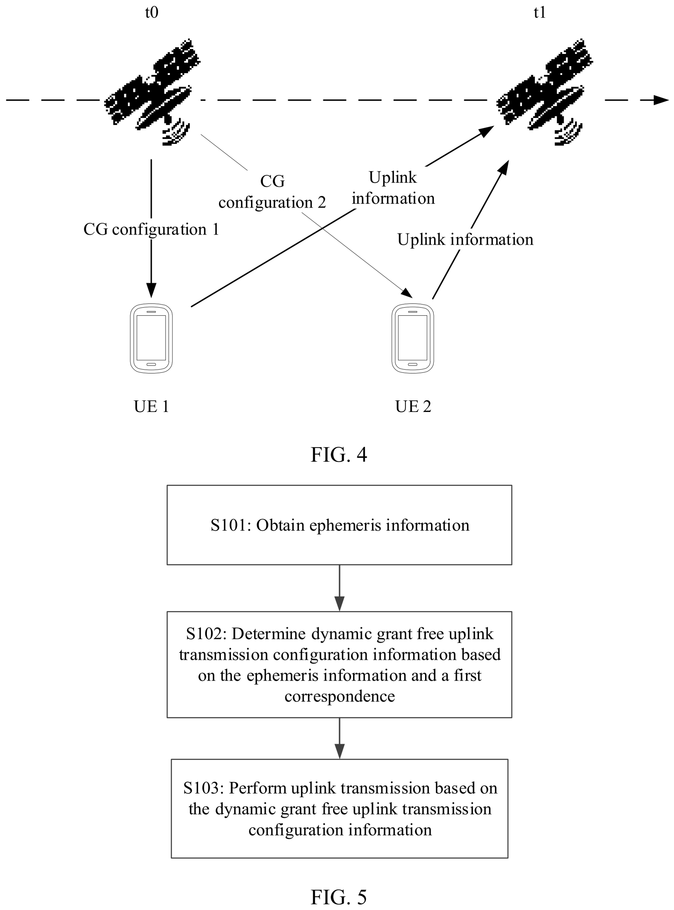

For example, in the NTN, the non-terrestrial device generally has a characteristic of a high moving speed. Therefore, it may be considered that a distance between the non-terrestrial device and the terminal device changes relatively quickly. Therefore, a timeliness requirement for transmission parameters between the terminal device and the non-terrestrial device is relatively high. The following uses a configuration of the repetition number of GF transmission as an example for description with reference to FIG. 4. The repetition number may be represented as K (K is a positive integer). In a process of K transmissions of the terminal device, if the base station has correctly demodulated the data packet when receiving the $(i<K)^{th}$ transmission, the base station delivers an early termination (early termination) instruction to the UE, to stop repetition of the UE from the $(i+1)^{th}$ time to the $K^{th}$ time, to reduce transmission overheads. As shown in FIG. 4, at a moment t0, a satellite sends a CG configuration 1 and a CG configuration 2 to UE 1 and UE 2 respectively. The repetition number K indicated by the CG configuration 1 obtained by the UE 1 is 4, and the repetition number K indicated by the CG configuration 2 obtained by the UE 2 is 8. At the moment t0, the UE 1 is relatively close to the satellite, and the UE 2 is relatively far away from the satellite. Therefore, the UE 1 uses a relatively small repetition number to reduce overheads, and the UE 2 needs to use a relatively large repetition number to improve communication reliability. However, when the UE 1 and the UE 2 perform repetition at a moment t1, the UE 1 is relatively far away from the satellite, and the UE 2 is relatively close to the satellite. Therefore, the UE 1 actually needs a larger repetition number to improve communication reliability, and the UE 2 can ensure transmission reliability without using a relatively large repetition number. Therefore, a resource waste exists for the UE 2. Therefore, the configuration of the repetition number does not meet a transmission requirement. In other words, the parameter CG configuration 1 and CG configuration 2 at the moment t0 are not applicable to the moment t1, and if the UE 1 and the UE 2 still use the CG configuration at the moment t0, communication performance is reduced.

In addition, if a CG configuration frequency is increased, highest configuration overheads are caused. For example, as shown in FIG. 5, if the CG configuration is configured based on the DCI, the satellite may separately configure the CG configuration of the UE 1 for moments t0, t1, and t2 based on the DCI. For example, the repetition number configured for the moment t0 is 8, the repetition number configured for the moment t1 is 4, and the repetition number configured for the moment t2 is 8, to adapt to distances (or path losses, for example, a path loss is represented by a signal-to-noise ratio (signal-to-noise ratio, SNR) or a signal to interference plus noise ratio (signal to interference plus noise ratio, SINR)) between the UE 1 and the satellite at the moments t0, t1, and t2 separately. However, in this solution, the satellite needs to separately send CG configurations for different moments to the UE, increasing signaling overheads and causing a resource waste.

To improve communication performance of GF transmission in non-terrestrial network communication, this application provides a communication method and apparatus. The method and the apparatus are based on a same concept. Because problem-resolving principles of the method and the apparatus are similar, mutual reference may be made to implementation of the apparatus and the method, and repeated parts are not described. The communication method may be performed by a terminal apparatus and a non-terrestrial device (or a non-terrestrial apparatus). The terminal apparatus may be a terminal device or a component in a terminal device. The non-terrestrial device may be a device such as a spacecraft or a satellite. The non-terrestrial device may have a function of an access network device, or may perform only a function of transparent transmission. The non-terrestrial apparatus may be a component in the non-terrestrial device. The component in this application may be at least one of a chip, a chip system, a processor, a transceiver, a processing unit, or a transceiver unit. For example, for the terminal device, the component may include a wireless transceiver module, and for the access network device, the component may include a CU, a DU, or the like. FIG. 5 is a schematic flowchart of a communication method according to this application. In the diagram, the method is described by using a terminal apparatus and a non-terrestrial apparatus as execution bodies. The method includes the following steps.

S101: The terminal apparatus obtains ephemeris information.

In S101, the terminal apparatus may receive the ephemeris information from the non-terrestrial device. In other words, the ephemeris information may be sent by the non-terrestrial device. In addition, when used as a chip or another component, the terminal apparatus may also receive ephemeris information from another component through a communication interface.

In this application, the ephemeris information may also be referred to as a satellite ephemeris (satellite ephemeris). The ephemeris information may be used to describe a location and a speed of spacecraft. The ephemeris information is generally in the format of a two-line orbital element (two-line orbital element, TLE). In the TLE data format, an orbital element list of earth orbital objects is encoded into two rows and 70 columns, and parameters such as time, coordinates, orientation, and a speed of the spacecraft are defined, achieving extremely high precision.

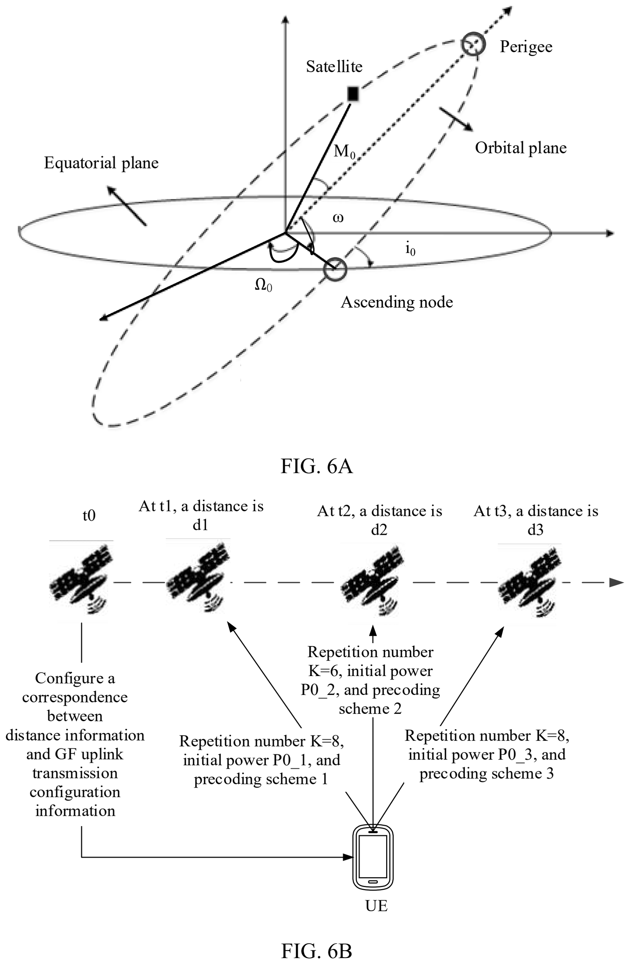

A satellite system shown in FIG. 6A is used as an example. If an ephemeris is described by using orbital parameters, a solvable ephemeris (or ephemeris information) includes seven parameters, as shown in Table 1-2.

Table 1-2

| Orbital plane parameters (orbital plane parameters) | $\sqrt{a}$ | Square root of a semi major axis (semi major axis/semi-major axis) |
|---|---|---|
| | e | Eccentricity (eccentricity) |
| | $i_0$ | Orbital inclination angle/inclination (inclination angle/inclination) at reference time |
| | $\Omega_0$ | Longitude (longitude) or right ascension (right ascension) of an orbital plane ascending node (ascending node) |
| | $\omega$ | Argument of perigee (argument of perigee) or argument of periapsis (argument of periapsis) |
| Satellite level parameters (satellite level parameters) | $M_0$ | Mean anomaly at reference time (mean anomaly at reference time/true anomaly and a reference point in time) |
| | $t_{0e}$ | Reference time, also referred to as ephemeris reference time (ephemeris reference time) or the epoch (the epoch) |

Based on the foregoing seven parameters, a coordinate location of the satellite at any moment t may be determined. Using the mean anomaly as an example, the reference moment $t_{0e}$ and the reference location $M_0$ are used to

determine the mean anomaly (mean anomaly) of the non-terrestrial device at the moment t, where the mean anomaly may be represented as M(t). For example, M(t) meets $M(t) = M_0 + n(t-t_{0e})$. M(t) may be used to calculate celestial coordinates of the satellite.

n is an average angular velocity of the satellite, and is obtained through calculation by using a gravitational constant G, earth mass $M_e$, and $\sqrt{a}$. For example, n meets:

$$n = \frac{2\pi}{T} = \sqrt{\frac{GM_e}{(\sqrt{a})^3}}.$$

The terminal apparatus may determine, based on the reference moment and the orbital parameters, coordinates of the non-terrestrial device that runs on the orbit at any moment t.

Optionally, in the NR protocol, the parameters shown in Table 1-2 are carried to the terminal device by using a system information block (system information block, SIB) 19. The SIB 19 may be used to carry satellite configuration information. $t_{0e}$ may be indicated by an epoch time (epochTime) field of NTN configuration (ntn-Config) information in the SIB 19 information, and other parameters in Table 1-2 are indicated by a plane (orbital) field in ephemeris information-release 17 (ephemerisInfo-r17) in the ntn-Config information in the SIB 19.

In addition, if the ephemeris is described in a coordinate system manner (for example, an earth-centered earth-fixed (earth-centered earth-fixed, ECEF) coordinate system), the terminal apparatus may determine the coordinate location of the non-terrestrial device at any moment t based on the reference moment and coordinate system parameters. The coordinate system parameters may be indicated by a position velocity (positionVelocity) field in the ephemeris information (ephemerisInfo) of the ntn-Config information in the SIB 19 information.

S102: The terminal apparatus determines GF uplink transmission configuration information based on the ephemeris information and a first correspondence.

In this application, the GF uplink transmission configuration information may include but is not limited to GF uplink transmission parameters in a random access process, GF uplink transmission parameters in direct data transmission, and GF uplink transmission parameters in small packet transmission.

For example, the GF uplink transmission configuration information includes at least one of the following:

(1) Time-frequency resource location information may indicate available time-frequency resources used by the terminal apparatus for GF uplink transmission. The terminal apparatus that performs GF transmission may select (or determine) uplink transmission resources based on the time-frequency resource location information, to perform GF transmission. Optionally, the time-frequency resources may be used for first transmission and/or repetition.

(2) A modulation and coding scheme may indicate different modulation and coding schemes. The modulation and coding scheme may be indicated by using an MCS table. For example, the MCS table may include a plurality of modulation and coding schemes, and different modulation and coding schemes are distinguished by using indexes (index). Therefore, the modulation and coding scheme may also be indicated by using an index. For example, the MCS table may include the indexes of the modulation and coding schemes and at least one of the following content: modulation (modulation), a coding rate (coding rate), spectral efficiency (spectral efficiency), and the like. One MCS table may include at least one type of modulation and coding scheme information.

(3) A repetition scheme includes a transmission number and redundancy version parameters of each transmission, and may be used by the terminal apparatus to determine a repetition number and a redundancy version used for each transmission.

(4) Power control scheme information may indicate a power control scheme available to the terminal apparatus in GF transmission, and the power control scheme may correspond to different power control parameters. For example, the power control parameters may include parameters such as an initial power P0 and a power control loop (power-ControlLoopToUse).

(5) Precoding scheme information may indicate a precoding scheme used in GF transmission. Optionally, different precoding schemes have different coding complexity degrees.

(6) Uplink transmission waveform information may indicate an uplink transmission waveform and/or waveform parameters used by the terminal apparatus. An available waveform includes a cyclic prefix-orthogonal frequency division multiplexing (cyclic prefix-orthogonal frequency division multiplexing, CP-OFDM) waveform or a discrete Fourier transform-spread-orthogonal frequency division multiplexing (discrete Fourier transform-spread-orthogonal frequency division multiplexing, DFT-S-OFDM) waveform, or another waveform that can be used for uplink transmission, for example, an uplink waveform newly introduced in a 6G communication system. For a communication scenario with a relatively large path loss, the DFT-S-OFDM waveform has characteristics of low power and a low peak to average power ratio (peak to average power ratio, PAPR). For a scenario with a relatively small path loss, detection efficiency of the CP-OFDM waveform is higher. The waveform parameters may include parameters such as a subcarrier spacing, a quantity of subcarriers, and a cyclic prefix (cyclic prefix, CP) length.

(7) Access scheme information corresponding to uplink transmission may indicate that the terminal apparatus uses an access manner such as OMA or NOMA. Different access manners may include different access parameters.

Optionally, for GF uplink data transmission in the random access process, the access parameters may further include preamble signal related parameters. The preamble signal related parameters include, for example, a parameter of a sequence used by a preamble signal, a time-frequency resource location of the preamble sequence, root sequence selection, a sequence length, a repetition number, a subcarrier spacing, or transmission power.

Optionally, for SDT transmission, the GF uplink transmission configuration information and/or the access parameters may further include at least one of the following:

A reference signal received power (reference signal receiving power, RSRP) threshold indicates an RSRP threshold that needs to be met to start CG-SDT transmission as required by the technical specification (technical specification, TS) TS38.321[3]. The RSRP threshold may be at an SSB level, and is used to select a proper SSB to perform CG-SDT. RSRP thresholds of different SSBs at different distances are inconsistent.

A timing advance (timing advance, TA) configuration is used to adjust TA configurations at different transmission distances.

A time alignment timer (time alignment timer, TAT) configuration indicates a TAT value required by TS38.321[3]. Optionally, TAT configurations at different transmission distances are different.

It may be understood that the GF uplink transmission configuration information in this application may include at least one piece of the foregoing information. In other words, the terminal apparatus may determine the at least one piece of the foregoing information based on the first correspondence and the method provided in this embodiment of this application. The following describes the foregoing GF uplink transmission configuration information with reference to specific examples, and a meaning and a characteristic of each piece of information are not described herein.

Optionally, the terminal apparatus may further receive the first correspondence from a network device. The network device may be a non-terrestrial device, or may be a terrestrial device that supports communication with the terminal apparatus, for example, an access network device or a core network device deployed on the ground. This is not specifically limited.

In addition, the first correspondence in this application may be preconfigured in the terminal apparatus, or may be predefined by using a protocol or the like. For example, the first correspondence is predefined in a factory configuration of the terminal apparatus.

In S102, the terminal apparatus may determine non-terrestrial device information based on the ephemeris information, and further determine the GF uplink transmission configuration information based on the non-terrestrial device information and the first correspondence. The non-terrestrial device information includes distance information and/or moment information. The distance information may indicate a distance between the terminal apparatus that performs uplink transmission and the non-terrestrial device. The moment information may indicate to compensate for a transmission latency of the ephemeris information.

In a possible implementation, when the non-terrestrial device information includes the distance information, correspondingly, the first correspondence may include a correspondence between the distance information and the GF uplink transmission configuration information. In a specific example, the distance information may be a distance or a predicted distance when the terminal apparatus performs transmission with the non-terrestrial device.

In another possible implementation, when the non-terrestrial device information may include the moment information, correspondingly, the first correspondence may include a correspondence between serving beam information, the moment information, and the GF uplink transmission configuration information. For example, the moment information may be determined based on a moment at which the non-terrestrial device sends the ephemeris information, a moment at which the terminal apparatus receives the ephemeris information, and a transmission latency between the non-terrestrial device and the terminal apparatus. The serving beam information may be information about a beam that the current terminal apparatus accesses (or belongs to). The beam information may be a synchronization signal and physical broadcast channel (physical broadcast channel, PBCH) block (synchronization signal and PBCH block, SSB) information (for example, an SSB index) or reference signal port information (for example, an index of a reference signal port). The reference signal is, for example, a demodulation reference signal (demodulation reference signal, DMRS) or a channel state information-reference signal (channel state information-reference signal, CSI-RS). With reference to Manner 1 and Manner 2, the following separately describes manners in which the terminal apparatus separately determines the GF uplink transmission configuration information based on the first correspondence in the foregoing two implementations. It may be understood that when the non-terrestrial device information includes the distance information and the moment information, for a manner of determining the GF uplink transmission configuration information based on the first correspondence, refer to the implementation. Details are not described again.

Manner 1: When the non-terrestrial device information includes the distance information, the first correspondence may include a correspondence between the distance information and the GF uplink transmission configuration information that is shown in Table 2. The first correspondence may be determined and indicated by the network device to the terminal apparatus.

Table 2

| Distance information: a distance x between the terminal apparatus and the non-terrestrial device | GF uplink transmission configuration information list |
|---|---|
| Distance level 1 a1<x≤a2 | GF uplink transmission configuration information 1 |
| Distance level 2 a2<x≤a3 | GF uplink transmission configuration information 2 |
| .... | ... |

Optionally, in Manner 1, the terminal apparatus may determine a location or a predicted location of the non-terrestrial device based on the ephemeris information, and determine the distance information based on location information of the terminal apparatus and the location or the predicted location of the non-terrestrial device. For example, the location information of the terminal apparatus and the location of the non-terrestrial device may be respectively celestial coordinates of the terminal apparatus and celestial coordinates of the non-terrestrial device. The terminal apparatus may determine a moment at which uplink transmission is performed, and determine, based on the ephemeris information, the predicted location of the non-terrestrial device at the moment at which uplink transmission is performed. Therefore, the terminal apparatus may determine, based on the predicted location and the location of the terminal apparatus, the distance between the terminal apparatus and the non-terrestrial device at the moment at which uplink transmission is performed, where the distance may be used as the distance information.

Further, the terminal apparatus may query the first correspondence based on the distance information to determine the GF uplink transmission configuration information. The terminal apparatus may query a distance level (or a distance range) within which the distance falls, to use the GF uplink transmission configuration information corresponding to the distance level as the determined GF uplink transmission configuration information. For example, as shown in Table 2, when the terminal apparatus determines that the distance 1 between the terminal apparatus and the non-terrestrial device that performs uplink transmission falls within the distance level 1, the terminal apparatus may determine, based on Table 2, to use the GF uplink transmission configuration information 1. For another example, when the terminal apparatus determines that the distance 2 between the terminal apparatus and the non-terrestrial device that performs uplink transmission falls within the distance level 2, the terminal apparatus may determine, based on Table 2, to use the GF uplink transmission configuration information 2. The distance 1 and the distance 2 respectively represent distances that are predicted by the terminal apparatus at different moments and that are between the terminal apparatus and the non-terrestrial device, or may represent distances between two terminal apparatuses at different locations and a same non-terrestrial device.

Optionally, the GF uplink transmission configuration information corresponding to the distance information is set based on the distance information. For example, the distance information and the corresponding GF uplink transmission configuration information may meet any one or more of the following conditions:

Condition 1: When the GF uplink transmission configuration information includes the power control scheme (or power parameters), for GF uplink transmission with a relatively large distance (that is, a relatively large path loss), a relatively large initial transmit power parameter is used to improve receiving performance, and for GF uplink transmission with a relatively small distance (that is, a relatively small path loss), a relatively small initial transmit power parameter may be used to reduce transmission interference to another user.

Using Table 2 as an example, if both the GF uplink transmission configuration information 1 and the GF uplink transmission configuration information 2 include power control schemes, because a distance value in the distance level 2 is greater than a distance value in the distance level 1, the power control scheme (or power parameters) included in the GF uplink transmission configuration information 2 may have a relatively large initial transmit power P0, to improve receiving performance; and the power control scheme (or power parameters) included in the uplink transmission configuration information 1 may have a relatively small initial transmit power P0, to avoid interference to another user. The distance value in the distance level 2 is greater than the distance value in the distance level 1, indicating that a path loss between the terminal apparatus and the non-terrestrial device at a moment at which the distance value falls within the distance level 2 is greater than a path loss between the terminal apparatus and the non-terrestrial device at a moment at which the distance value falls within the distance level 1.

Based on this design, different values of P0, that is, other power control parameters, may be used when the distance (or the path loss) between the terminal apparatus and the non-terrestrial device changes, to better adapt to the change of the distance (or the path loss) between the terminal apparatus and the non-terrestrial device.

Condition 2: When the GF uplink transmission configuration information includes the precoding scheme information, for GF uplink transmission with a relatively large distance, a more complex precoding scheme is used to obtain a larger spatial gain to resist a performance loss caused by a path loss, and for GF uplink transmission with a relatively small distance, a less complex precoding scheme may be used.

Still using Table 2 as an example, if both the GF uplink transmission configuration information 1 and the GF uplink transmission configuration information 2 include precoding schemes, because the distance value in the distance level 2 is greater than the distance value in the distance level 1, compared with the precoding scheme included in the GF uplink transmission configuration information 1, the precoding scheme included in the GF uplink transmission configuration information 2 needs to be more complex to obtain a larger spatial gain to resist a performance loss caused by a path loss.

Condition 3: When the GF uplink transmission configuration information includes the uplink transmission waveform information, for GF uplink transmission with a relatively large distance, a waveform with a lower power and a low PAPR is used, and for GF uplink transmission with a relatively small distance, a waveform with better detection efficiency may be used, so that power and PAPR requirements are relatively reduced.

Still using Table 2 as an example, if both the GF uplink transmission configuration information 1 and the GF uplink transmission configuration information 2 include the uplink transmission waveform information, because the distance value in the distance level 2 is greater than the distance value in the distance level 1, the uplink transmission waveform corresponding to the GF uplink transmission configuration information 2 needs to be a waveform with a lower power and a low PAPR for transmission, for example, DFT-S-OFDM; and the uplink transmission waveform corresponding to the GF uplink transmission configuration information 1 may be a CP-OFDM waveform, to obtain better detection efficiency.

Condition 4: When the GF uplink transmission configuration information includes a repetition number, for GF uplink transmission with a relatively large distance, a relatively large repetition number is used, to improve transmission reliability, and for GF uplink transmission with a relatively small distance, a relatively small repetition number may be used, to reduce resource occupation.

Still using Table 2 as an example, if both the GF uplink transmission configuration information 1 and the GF uplink transmission configuration information 2 include the repetition number, because the distance value in the distance level 2 is greater than the distance value in the distance level 1, the repetition number K corresponding to the GF uplink transmission configuration information 2 is larger, and the repetition number K corresponding to the GF uplink transmission configuration information 1 is smaller.

Similarly, a redundancy version (redundancy version, RV) configuration in K transmissions may alternatively be selected based on a distance or a path loss of the UE, and different RV configurations are used to mine a larger repetition combination gain to resist the path loss. For example, when the distance between the terminal apparatus and the non-terrestrial device is relatively small during uplink transmission (for example, the distance 1 falls within the distance level 1), RV version values separately used for K repetitions corresponding to the GF uplink transmission configuration information 1 may be the same. For example, 0 is used as an RV value for K repetitions. In this case, a gain of time division transmission can be obtained. When the distance between the terminal apparatus and the non-terrestrial device is relatively large during uplink transmission, RV version numbers separately used for K repetitions corresponding to the GF uplink transmission configuration information may be different. For example, for a distance level N, RV version numbers separately used for K repetitions corresponding to GF uplink transmission configuration information N are respectively 0, 2, 3, and 1. In this case, in addition to a time division gain, an additional coding gain can be obtained.

Optionally, if a distribution interval of K repetitions is relatively large, RV versions of any two repetitions in K repetitions corresponding to the moment information may be different. The distribution interval may be a distance spacing and a time interval. The distance spacing is a difference between a distance between the terminal apparatus and the non-terrestrial device when the terminal apparatus performs repetition for the first time and a distance between the terminal apparatus and the non-terrestrial device when the terminal apparatus performs repetition for the $K^{th}$ time. The time interval is a time difference between a moment at which the terminal apparatus performs repetition for the first time and a moment at which the terminal apparatus performs repetition for the $K^{th}$ time.

For example, even if the distance information belongs to a relatively small distance level, but a distance spacing or a time interval between the first transmission and the $K^{th}$ transmission of K transmissions exceeds a corresponding threshold, the GF uplink transmission configuration information may indicate to use different RV versions for K transmissions. For example, when the time interval between the first repetition and the $K^{th}$ repetition is greater than the threshold, RV version numbers 0, 2, 3, and 1 are respectively used for K transmissions, to obtain a coding gain and improve communication performance.

Condition 5: When the GF uplink transmission configuration information includes the modulation and coding scheme, for GF uplink transmission with a relatively large distance, a modulation and coding scheme with a relatively low coding rate is used to obtain a larger channel coding gain, and for GF uplink transmission with a relatively small distance, a modulation and coding scheme with a relatively high coding rate may be used to increase capacity.

Still using Table 2 as an example, if both the GF uplink transmission configuration information 1 and the GF uplink transmission configuration information 2 include modulation and coding schemes, because the distance value in the distance level 2 is greater than the distance value in the distance level 1, uplink transmission corresponding to the distance falling into the distance level 2 requires a larger channel coding gain. Therefore, an MCS table with a relatively low coding rate may be selected for the modulation and coding scheme corresponding to the GF uplink transmission configuration information 2. In addition, for the modulation and coding scheme corresponding to the GF uplink transmission configuration information 1, an MCS table with a relatively high coding rate may be selected to transmit more information. In addition, the channel coding scheme is similar to this condition. Because the distance value in the distance level 2 is greater than the distance value in the distance level 1, the channel coding scheme corresponding to the GF uplink transmission configuration information 2 may be channel coding with better performance at a low coding rate (for example, a base graph (base graph, BG) 2 of NR low density parity check (low density parity check, LDPC) code encoding) for transmission, and the channel coding scheme corresponding to the GF uplink transmission configuration information 1 may be a channel coding scheme with better performance at a high coding rate (for example, a BG 1 of the NR LDPC code) for transmission.

Condition 6: When the GF uplink transmission configuration information includes the access scheme information (or the access parameters), for GF uplink transmission with a relatively large distance, an access scheme with better orthogonality and relatively small access interference is used, and for GF uplink transmission with a relatively small distance, an access scheme with relatively general orthogonality may be used. The access scheme information may indicate the access scheme, and access parameters in different access schemes may be the same or different.

Still using Table 2 as an example, GF parameters may be the access scheme information (or the access parameters). Using non-orthogonal access as an example, because the distance value in the distance level 2 is greater than the distance value in the distance level 1, the access scheme corresponding to the GF uplink transmission configuration information 2 may be performing transmission by using a codebook or a sequence with better orthogonality and minimum access interference. The access scheme corresponding to the GF uplink transmission configuration information 1 benefits from a relatively high SNR and a relatively strong anti-interference capability that are caused by a relatively small communication distance. Therefore, selection of a codebook or a sequence may be relatively loose. For example, a codebook or a sequence with general orthogonality may be selected for sending.

Optionally, for GF uplink data transmission in the random access process, the access parameters may further include preamble signal related parameters such as a parameter of a sequence used by a preamble signal, a time-frequency resource location of the preamble sequence, root sequence selection, a sequence length, a repetition number, a subcarrier spacing, or transmission power.

For example, on the premise that timing advance (timing advance) is met, the preamble signal related parameters are selected based on the distance or distance level information. For example, Table 2 further includes a distance level 3, where a distance value in the distance level 3 is greater than the distance value in the distance level 2, and the distance value in the distance level 2 is greater than the distance value in the distance level 1. The following configuration manner may be used: A basic sequence indicated by GF uplink transmission configuration information 3 corresponding to a distance 3 in the distance level 3 is repeated once, a basic sequence indicated by the GF uplink transmission configuration information 2 corresponding to the distance 2 in the distance level 2 is repeated twice, and a basic sequence indicated by the GF uplink transmission configuration information 1 corresponding to the distance 1 in the distance level 1 is repeated four times. For another example, the foregoing example is still used. On the premise that timing advance is met, a subcarrier spacing that is of a preamble signal and that is configured in the GF uplink transmission configuration information 1 corresponding to the distance 1 in the distance level 1 is relatively small, for example, 1.25 kilohertz (kHz), and a subcarrier spacing that is of a preamble signal and that is indicated by the GF uplink transmission configuration information 2 corresponding to the distance 2 in the distance level 2 is relatively large, for example, 15 kHz. For another example, GF uplink transmission configuration information at different distances corresponds to different preamble signal root sequences, to avoid mutual impact between preamble signals. For example, the foregoing example is still used. The distance 1 in the distance level 1, the distance 2 in the distance level 2, and the distance 3 in the distance level 3 respectively correspond to different preamble signal root sequences. Optionally, adjustment of the preamble signal related parameters may be implemented by selecting different preamble signal formats (preamble format) in preamble signal settings in the 2-step random access process. For example, different GF uplink transmission configuration information indicates different preamble signal formats. Optionally, for SDT transmission, the GF uplink transmission configuration information may be determined based on a distance or a distance level within which the distance falls. For example, for different distance levels, different GF uplink transmission configuration information in SDT transmission may include different parameters of at least one of the RSRP threshold, the TA configuration, or the TAT configuration required for starting SDT.

It may be understood that the foregoing condition 1 to condition 6 are optional conditions of GF uplink transmission configuration information. For example, when both the GF uplink transmission configuration information 1 and the GF uplink transmission configuration information 2 shown in Table 2 include power control schemes (or power parameters), the condition 1 may be met, or the condition 1 may not be met. In addition, any two pieces of GF uplink transmission configuration information shown in Table 2 may meet one or more of the condition 1 to the condition 6. For example, the GF uplink transmission configuration information 1 and the GF uplink transmission configuration information 2 meet the condition 1 and the condition 2, and the GF uplink transmission configuration information 3 and GF uplink transmission configuration information 4 that are not shown in Table 2 meet the condition 3 and the condition 4. In addition, conditions that are met by two different groups of uplink transmission configuration information may also overlap. For example, the GF uplink transmission configuration information 1 and the GF uplink transmission configuration information 2 meet the condition 1 and the condition 2, and the GF uplink transmission configuration information 3 and the GF uplink transmission configuration information 4 that are not shown in Table 2 meet the condition 1, the condition 2, the condition 3, and the condition 4.

It may be further understood that, in any two pieces of GF uplink transmission configuration information included in the first correspondence, some or all parameters in the GF uplink transmission configuration information may be adjusted based on a corresponding distance change. For example, the GF uplink transmission configuration information 1 and the GF uplink transmission configuration information 2 meet the condition 1, and other parameters such as precoding scheme information corresponding to the GF uplink transmission configuration information 1 and precoding scheme information corresponding to the GF uplink transmission configuration information 2 are the same. In other words, only some parameters in the GF uplink transmission configuration information may be changed based on the distance change, and other transmission remains unchanged.

FIG. 6B is used as an example. It is assumed that the GF uplink transmission configuration information in Table 2 includes the GF uplink transmission configuration information 1, the GF uplink transmission configuration information 2, the GF uplink transmission configuration information 3, ..., and the GF uplink transmission configuration information N, which respectively correspond to the distance level 1, the distance level 2, the distance level 3, ..., and the distance level N, where distance values in any two distance levels of the distance level 1, the distance level 2, the distance level 3, ..., and the distance level N are different. It can be learned from FIG. 6B that, at a moment t1, the distance between the UE and the non-terrestrial device is d1; at a moment t2, the distance between the UE and the non-terrestrial device is d2; and at a moment t3, the distance between the UE and the non-terrestrial device is d3. Assuming that d1 falls within the distance level 1, d2 falls within the distance level 2, and d3 falls within the distance level 3, at the moment 1, the moment 2, and the moment 3, the terminal apparatus may perform uplink transmission separately by using the GF uplink transmission configuration information 1, the GF uplink transmission configuration information 2, and the GF uplink transmission configuration information 3. In the GF uplink transmission configuration information 1, a precoding scheme in which the repetition number K is 8 and the initial transmit power is P0_1 is denoted as a precoding scheme 1 (precoder 1); in the GF uplink transmission configuration information 2, a precoding scheme in which the repetition number K is 6 and the initial transmit power is P0_2 is denoted as a precoding scheme 2 (precoder 2); and in the GF uplink transmission configuration information 3, a precoding scheme in which the repetition number K is 8 and the initial transmit power is P0_3 is denoted as a precoding scheme 3 (precoder 3) It can be learned from FIG. 6B that the distance 2 is less than the distance 1 and the distance 3. Therefore, the terminal apparatus may use a relatively small repetition number when performing uplink transmission at the moment 2, and may use a relatively large repetition number at the moment 1 and the moment 3. In addition, optionally, P0_2 may be less than P0_1 and P0_3. Optionally, precoding complexity of the precoder 1 and the precoder 3 may be higher than precoding complexity of the precoder 2, to resist a larger path loss. Optionally, the non-terrestrial device may configure, for the UE at the moment t0, the correspondence between the distance and the GF uplink transmission configuration information shown in Table 2, that is, the first correspondence. Further, optionally, t0 may be earlier than t1.

Optionally, for Manner 1, the terminal apparatus may further report the location information of the terminal apparatus to the non-terrestrial device, so that the non-terrestrial device aligns the GF uplink transmission configuration information. For example, the non-terrestrial device may determine the information about the distance between the terminal apparatus and the non-terrestrial device based on the location information of the non-terrestrial device and the location information of the terminal apparatus, and query the first correspondence based on the distance information to determine the GF uplink transmission configuration information, to receive uplink transmission from the terminal apparatus based on the GF uplink transmission configuration information.

Manner 2: When the non-terrestrial device information includes the moment information, the first correspondence may include a correspondence between the serving beam information, the moment information, and the GF uplink transmission configuration information, as shown in Table 3. The first correspondence may be determined and indicated by the network device to the terminal apparatus. In Manner 2, the moment information may be determined based on an uplink transmission moment of the terminal apparatus and reference moment information.

In a possible implementation, the reference moment information is $t_{0e}$ carried in the ephemeris. For example, the moment information is represented as $t-t_{0e}$. $t$ is a moment at which the terminal apparatus sends an uplink signal to the non-terrestrial device, and may be referred to as the uplink transmission moment. Therefore, the terminal apparatus may determine the moment information based on the uplink transmission moment and $t_{0e}$.

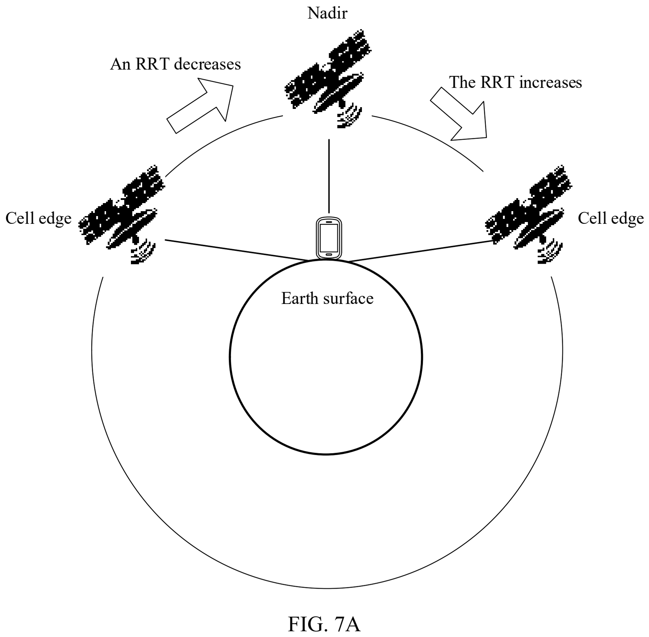

It may be understood that, assuming that the terminal apparatus sends uplink information to the non-terrestrial device at the moment t, the terminal apparatus may use the location of the non-terrestrial device at the moment $t-t_{0e}$ as the predicted location of the non-terrestrial device during uplink transmission at the moment t, to offset impact of a transmission latency on location estimation. Therefore, the first correspondence shown in Table 3 may be queried based on the moment information $t-t_{0e}$, to determine the corresponding GF uplink transmission configuration information. As shown in FIG. 7A, as the satellite moves, when the satellite is located at a nadir (nadir), a round-trip time (round-trip time, RTT) between the terminal apparatus and the satellite is the minimum, and correspondingly, a value of the moment information determined by the terminal apparatus is relatively small. When the satellite moves to a cell edge (cell edge) location, the RRT between the terminal apparatus and the satellite is relatively large, and correspondingly, a value of the moment information determined by the terminal apparatus is relatively large.

For example, in Table 3, an example in which the serving beam information is an identifier of a serving beam is used for description. In actual application, the identifier may be replaced with other information that may indicate a serving beam.

Table 3

| Serving beam identifier (identifier, ID) | Moment information, indicating a satellite reference moment $t-t_{0e}$ on the UE side | GF parameter configuration list |
|---|---|---|
| Beam ID 1 | Moment level 1: $t0 < t-t_{0e} \leq t1$ | Configuration 1-1 |
| | Moment level 2: $t1 < t-t_{0e} \leq t2$ | Configuration 1-2 |
| | .... | ... |
| | Moment level N: $t(N-1) < t-t_{0e} \leq tN$ | Configuration 1-N |
| Beam ID 2 | Moment level 1: $t0' < t-t_{0e} \leq t1'$ | Configuration 2-1 |
| | Moment level 2: $t1' < t-t_{0e} \leq t2'$ | Configuration 2-2 |
| | .... | ... |
| | Moment level N: $t(N-1)' < t-t_{0e} \leq tN'$ | Configuration 2-N |
| .... | .... | .... |

Values of t0, t1, t2, ..., tN, t0', t1', t2', ..., and tN' are positive real numbers.

As shown in Table 3, when an ID of a serving beam of the terminal apparatus is the ID 1, and a moment value (denoted as a moment 1) indicated by the moment information falls within the moment level (or moment range) 1, the GF uplink transmission configuration information obtained by the terminal apparatus by querying the first correspondence is the configuration 1-1. In addition, when the ID of the serving beam of the terminal apparatus is the ID 2, and the moment value (denoted as a moment 2) indicated by the moment information still falls within the moment level 1, the GF uplink transmission configuration information obtained by the terminal apparatus by querying the first correspondence is the configuration 2-1. The configuration 2-1 and the configuration 1-1 may have partially same or all same parameters, for example, share at least one same GF parameter, or may not include a same parameter. In addition, for a same beam, for example, the beam ID 1, the GF uplink transmission configuration information corresponding to different moment information may be partially or completely the same, or may be completely different. This is not specifically limited. In addition, for different beam IDs, ranges of the moment level 1 may be the same or different. This is not specifically limited in this application. For example, a moment range of the moment level 1 corresponding to the beam ID 1 is (t0, t1], a moment range of the moment level 1 corresponding to the beam ID 2 is (t0, t1'], and t1 may be equal to t1', or t1 may not be equal to tl'. Optionally, the GF uplink transmission configuration information may alternatively be the same for same beam information and different moment levels. This is not specifically limited in this application.

Optionally, it is assumed that when the satellite is located at two cell edge locations shown in FIG. 7A, the moment information determined by the terminal apparatus is the same. However, when the satellite is located at the two different cell edge locations, serving beams of the terminal apparatus are different. Therefore, different GF uplink transmission configuration information may alternatively be used at the same moment information. In other words, in this application, when the moment information determined by the terminal apparatus is the same, the GF uplink transmission configuration information used by the terminal apparatus when the satellite is located at different locations may be distinguished based on the beam information.

Based on this design, different GF parameter configuration information may be used when the moment information between the terminal apparatus and the non-terrestrial device changes, to better adapt to a change of a communication environment between the terminal apparatus and the non-terrestrial device.

Optionally, corresponding GF uplink transmission configuration information is set based on the moment information. For example, a plurality of pieces of moment information corresponding to a same serving beam and a plurality of pieces of corresponding GF uplink transmission configuration information may meet any one or more of the following conditions:

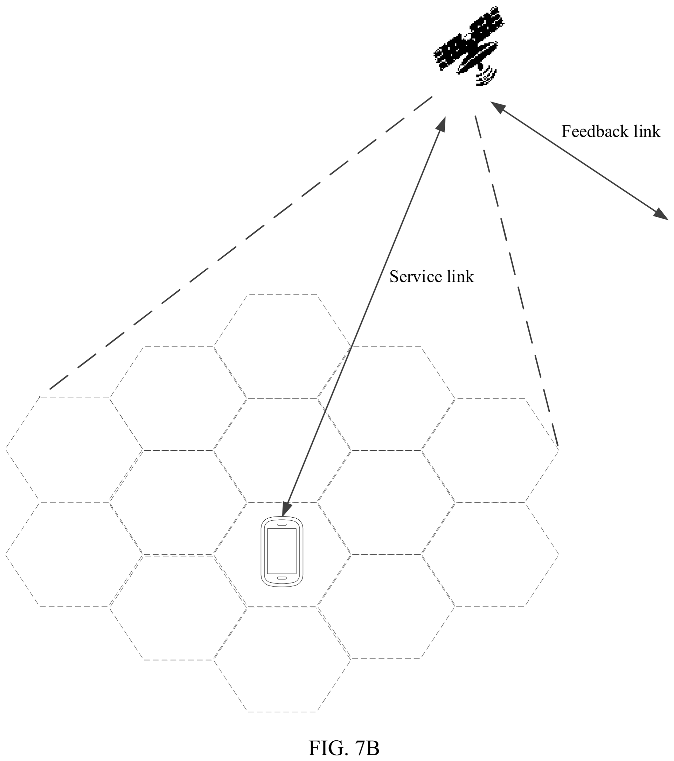

Condition 7: When the GF uplink transmission configuration information includes the power control scheme (or power parameters), if a moment indicated by the moment information belongs to a time period in which the satellite is far away from the terminal (or a time level, for example, a time period in which the satellite moves to a location near the cell edge locations shown in FIG. 7A), a relatively large initial transmit power parameter may be used for the GF uplink transmission configuration information, to improve receiving performance. If the moment indicated by the moment information belongs to a time period in which the satellite moves to a location near the nadir (or a time level, for example, a time period in which the satellite moves to the location near the nadir shown in FIG. 7), a relatively small initial transmit power parameter may be used for the GF uplink transmission configuration information, to reduce transmission interference to another user. It may be understood that, due to satellite motion, a distance between a same beam direction area and the non-terrestrial device is time-varying, and distances at different moments are obviously different. Based on the GF parameter configuration list in Table 3, optimal GF uplink transmission configuration parameters may be enabled in areas in different moment information. Therefore, the terminal apparatus in a beam service area selects parameters in a matching time period as the moment information changes.

Condition 8: When the GF uplink transmission configuration information includes the precoding scheme information, if the moment indicated by the moment information belongs to a time period (or a time level) in which the satellite is far away from the terminal, in the GF uplink transmission configuration information, a more complex precoding scheme may be used to obtain a larger spatial gain to resist a performance loss caused by a path loss; or if the moment indicated by the moment information belongs to a time period (or a time level) in which the satellite moves to a location near the nadir, a precoding scheme with relatively low complexity may be used in the GF uplink transmission configuration information.

Condition 9: When the GF uplink transmission configuration information includes the uplink transmission waveform information, if a moment indicated by the moment information belongs to a time period (or a time level) in which the satellite is far away from the terminal, a waveform with a lower power and a low PAPR may be used in the GF uplink transmission configuration information; or if the moment indicated by the moment information belongs to a time period (or a time level) in which the satellite moves to a location near the nadir, a waveform with better detection efficiency may be used in the GF uplink transmission configuration information, so that power and PAPR requirements are relatively reduced.

Condition 10: When the GF uplink transmission configuration information includes the repetition number, if a moment indicated by the moment information belongs to a time period (or a time level) in which the satellite is far away from the terminal, a relatively large repetition number K may be used in the GF uplink transmission configuration information, to improve transmission reliability; or if the moment indicated by the moment information belongs to a time period (or a time level) in which the satellite moves to a location near the nadir, a relatively small repetition number K may be used in the GF uplink transmission configuration information, to reduce resource occupation.

Similarly, the redundancy version configuration in K transmissions may alternatively be selected based on a moment level to which the moment information of the UE belongs, and different RV configurations are used to mine a larger repetition combination gain to resist the path loss. For example, when the moment information belongs to a time period (or a time level) in which the satellite moves to a location near the nadir, RV versions of K repetitions corresponding to the moment information are all the same, for example, are all 0. In this case, the terminal apparatus may perform K repetitions by using the same RV version, to obtain a gain of time division transmission. When the moment information belongs to a time period (or a time level) in which the satellite is far away from the terminal, RV version numbers of K repetitions corresponding to the moment information may be different. For example, when the repetition number is 4, RV version numbers 0, 2, 3, and 1 are respectively used for four repetitions. In this case, a plurality of terminal apparatuses may perform transmission based on RV version numbers corresponding to the GF uplink transmission configuration information 1 to the GF uplink transmission configuration information 4. In addition to a time division gain, an additional coding gain can be obtained.

Optionally, if a distribution interval of K repetitions is relatively large, RV versions of any two repetitions in K repetitions corresponding to the moment information may be different. With reference to the foregoing description, even if the moment information belongs to the time period (or the time level) in which the satellite moves to the location near the nadir, but a distance spacing or a time interval between the first transmission and the $K^{th}$ transmission of K transmissions exceeds a corresponding threshold, the GF uplink transmission configuration information may indicate to use different RV versions for K transmissions. For example, when the time interval between the first repetition and the $K^{th}$ repetition is greater than the threshold, RV version numbers 0, 2, 3, and 1 are respectively used for K transmissions, to obtain a coding gain and improve communication performance.

Condition 11: When the GF uplink transmission configuration information includes the modulation and coding scheme, if a moment indicated by the moment information belongs to a time period (or a time level) in which the satellite is far away from the terminal, a modulation and coding scheme with a relatively low coding rate may be used in the GF uplink transmission configuration information, to obtain a larger channel coding gain; or if the moment indicated by the moment information belongs to a time period (or a time level) in which the satellite moves to a location near the nadir, a modulation and coding scheme with a relatively high coding rate may be used in the GF uplink transmission configuration information, to improve capacity.

Condition 12: When the GF uplink transmission configuration information includes the access scheme information (or the access parameters), if a moment indicated by the moment information belongs to a time period (or a time level) in which the satellite is far away from the terminal, an access scheme with better orthogonality and relatively small access interference may be used in the GF uplink transmission configuration information; or if the moment indicated by the moment information belongs to a time period (or a time level) in which the satellite moves to a location near the nadir, an access scheme with relatively poor orthogonality may be used in the GF uplink transmission configuration information, to reduce overheads of an access process.

Optionally, for GF uplink data transmission in the random access process, the access parameters may further include preamble signal related parameters. For details, refer to the description of the condition 6. For example, for same serving beam information, when a moment value in the moment level 3 is greater than a moment value in the moment level 2, and the moment value in the moment level 2 is greater than a moment value in the moment level 3, the following configuration manner may be used: A basic sequence indicated by GF uplink transmission configuration information corresponding to the moment level 1 is repeated once, a basic sequence indicated by GF uplink transmission configuration information corresponding to the moment level 2 is repeated twice, and a basic sequence indicated by GF uplink transmission configuration information corresponding to the moment level 3 is repeated four times. For another example, still using the foregoing example, in the same serving beam information, when timing advance is met, a subcarrier spacing that is of a preamble signal and that is configured in the GF uplink transmission configuration information corresponding to the moment level 2 is relatively small, for example, 1.25 kHz, and a subcarrier spacing that is of a preamble signal and that is indicated by the GF uplink transmission configuration information corresponding to the moment level 1 is relatively large, for example, 15 kHz. For another example, still using the foregoing example, in the same serving beam information, GF uplink transmission configuration information corresponding to different moment levels corresponds to different preamble signal root sequences, to avoid mutual impact between preamble signals. Optionally, the foregoing adjustment may be implemented by selecting different preamble signal formats in preamble signal settings in the 2-step random access process. For example, different GF uplink transmission configuration information indicates (or corresponds to) different preamble signal formats.

Optionally, for SDT transmission, the GF uplink transmission configuration information may be determined based on the moment information or a moment level corresponding to the moment information. For example, for different moment levels, different GF uplink transmission configuration information in SDT transmission may include different parameters of at least one of the RSRP threshold, the TA configuration, or the TAT configuration required for starting SDT.

For implementations of the condition 7 to the condition 12, refer to the descriptions of the condition 1 to the condition 6. A difference lies in that the corresponding GF uplink transmission configuration information is determined based on a moment level within which the moment information falls in the condition 7 to the condition 12.

In addition, it may be understood that, for different serving beams, GF uplink transmission configuration information corresponding to a same moment value (or a moment level) may be different. The reason lines in that, as in FIG. 7B, different serving beams correspond to different service areas. In FIG. 7B, a hexagonal area represents a service area of one beam. Therefore, at a particular moment, distances (or path losses) between terminal apparatuses in service areas of different serving beams and a same non-terrestrial device are different. Therefore, different GF uplink transmission configuration information needs to be set for different serving beams. Setting corresponding GF uplink transmission configuration information with reference to the serving beam information and the moment information may adapt to a path loss change caused by the beam information and a transmission latency, thereby improving communication performance.

Optionally, in another feasible implementation of Manner 2, the reference moment information is a subframe number $N_0$ of a reference moment, or a universal time coordinated (universal time coordinated, UTC) time corresponding to the reference moment. The terminal apparatus may deduce the UTC time corresponding to the reference moment based on the subframe number $N_0$ of the reference moment. In this implementation, the moment information may be represented as $t-t_0$. $t_0$ may be the UTC time corresponding to $N_0$, and t is the uplink transmission moment of the terminal apparatus. Optionally, $t_0$ may alternatively be carried in the ephemeris information; or $N_0$ may be carried in the ephemeris information, and the terminal apparatus deduces the corresponding UTC time $t_0$ based on $N_0$.

It may be understood that in this implementation, the correspondence shown in Table 3 needs to be replaced with a correspondence between the beam information, $t-t_0$, and the GF uplink transmission configuration information. For a manner of setting the GF uplink transmission configuration information in the first correspondence, refer to the description of Table 3. Details are not described again.

For example, based on the description of Manner 2, in Manner 2, the terminal apparatus may determine the moment information based on the ephemeris information, and query the first correspondence based on the serving beam information and the moment information, to determine the GF uplink transmission configuration information. The terminal apparatus may determine a moment at which uplink transmission is performed, determine, based on the ephemeris information, the predicted location of the non-terrestrial device at the moment at which uplink transmission is performed, and determine the moment information based on the predicted location, for example, determine the moment information based on Formula 1, or determine the moment information based on a manner such as querying a table.

Optionally, for Manner 2, the terminal apparatus may further report the location information of the terminal apparatus to the non-terrestrial device, so that the non-terrestrial device aligns the GF uplink transmission configuration information. For example, the non-terrestrial device may determine the moment information based on the location information of the non-terrestrial device and the location information of the terminal apparatus, and query the first correspondence based on the serving beam information and the moment information to determine the GF uplink transmission configuration information, to receive the uplink transmission from the terminal apparatus based on the GF uplink transmission configuration information.

S103: The terminal apparatus performs uplink transmission based on the GF uplink transmission configuration information.

Correspondingly, the non-terrestrial device receives the uplink transmission of the terminal apparatus, or the non-terrestrial device transparently transmits the uplink transmission of the terminal apparatus to the terrestrial device. Optionally, the network device may obtain, based on the location information of the terminal apparatus, the GF uplink transmission configuration information synchronized with the terminal apparatus, to improve receiving performance. It may be understood that S101 to S103 may be applicable to uplink data transmission in the random access process, may be applicable to direct data transmission, or may be applicable to small packet transmission. This is not specifically limited. For uplink data transmission in the random access process, in S103, the terminal apparatus may send uplink data and a random access preamble (namely, a preamble signal) in one message. For direct data transmission, in S103, the terminal apparatus may send uplink data and does not need to send a preamble signal.

It may be understood that, to implement functions in the foregoing embodiments, an embodiment of this application further provides a communication apparatus. The communication apparatus may include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

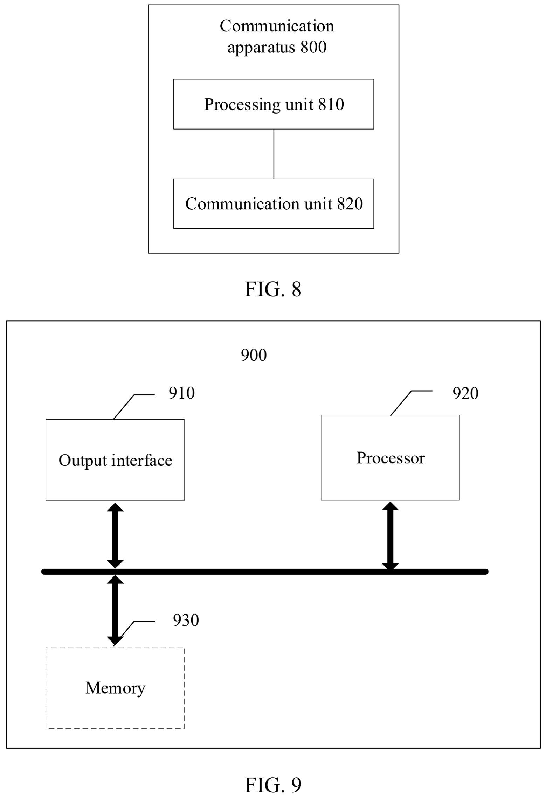

FIG. 8 to FIG. 10 are diagrams of structures of possible communication apparatuses according to embodiments of this application. The communication apparatuses may be configured to implement functions corresponding to the foregoing method embodiment, and therefore can also achieve the beneficial effects of the foregoing method embodiment. In a possible implementation, the communication apparatus may be the network device or the terminal device shown in FIG. 1 or FIG. 2. For related details and effect, refer to the descriptions in the foregoing embodiments. As shown in FIG. 8, a communication apparatus 800 includes a processing unit 810 and a communication unit 820. The communication unit 820 may alternatively be a transceiver unit, an input/output interface, or the like. The communication apparatus 800 may be configured to implement a function of a transmit end or a receive end in the method embodiment shown in FIG. 5.

Optionally, when implementing the method shown in FIG. 5, the processing unit 810 may be configured to: obtain ephemeris information, and determine grant free uplink transmission configuration information based on the ephemeris information and a first correspondence. The communication unit 820 may be configured to perform uplink transmission based on the uplink transmission configuration information.

In a possible implementation, the processing unit 810 may be configured to: determine non-terrestrial device information based on the ephemeris information, where the non-terrestrial device information includes distance information and/or moment information, the distance information indicates a distance between a terminal performing uplink transmission and a non-terrestrial device, the moment information is determined based on uplink transmission moment information and reference moment information, and the reference moment information is included in the ephemeris information; and determine the grant free uplink transmission configuration information based on the non-terrestrial device information and the first correspondence.

In a possible implementation, the non-terrestrial device information includes the distance information, and the processing unit 810 may be configured to query the first correspondence based on the distance information, to determine the grant free uplink transmission configuration information.

In a possible implementation, the non-terrestrial device information includes the moment information, and the processing unit 810 may be configured to query the first correspondence based on serving beam information and the moment information, to determine the grant free uplink transmission configuration information.

In a possible implementation, the communication unit 820 may be further configured to receive the first correspondence from a network device.

In a possible implementation, the grant free uplink transmission configuration information includes at least one of the following: time-frequency resource location information; a modulation and coding scheme; a repetition number; a power control parameter; precoding scheme information; uplink transmission waveform information; an access scheme parameter corresponding to uplink transmission; a parameter of a preamble signal; time-frequency resource information of a preamble signal; root sequence information of a preamble signal; a subcarrier spacing; a reference signal received power threshold; a timing advance configuration; time alignment timer configuration; time-frequency resource location information; a modulation and coding scheme; a repetition number; power control scheme information; a power control parameter; precoding scheme information; uplink transmission waveform information; access scheme information corresponding to uplink transmission; and access parameters corresponding to uplink transmission.

Division into modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 9 shows a communication apparatus 900 provided in an embodiment of this application. The communication apparatus 900 is configured to implement the communication method provided in this application. The communication apparatus 900 may be a communication apparatus that applies the communication method, a component in the communication apparatus, or an apparatus that can be used matching the communication apparatus. The communication apparatus 900 may be a transmit end or a receive end. The communication apparatus 900 may alternatively be a chip system or a chip. In this embodiment of this application, the chip system may include a chip, or may include a chip and another discrete component. The communication apparatus 900 includes at least one processor 920, configured to implement the communication method provided in embodiments of this application. The communication apparatus 900 may further include an output interface 910, and the output interface may also be referred to as an input/output interface. In this embodiment of this application, the output interface 910 may be configured to communicate with another apparatus through a transmission medium, and may include sending and/or receiving functions. For example, when the communication apparatus 900 is a chip, the communication apparatus 900 performs transmission with another chip or component through the output interface 910. The processor 920 may be configured to implement the method shown in the foregoing method embodiment.

For example, the processor 920 may be configured to perform an action performed by the processing unit 810, and the output interface 910 may be configured to perform an action performed by the communication unit 820. Details are not described again.

Optionally, the communication apparatus 900 may further include at least one memory 930, configured to store program instructions and/or data. The memory 930 is coupled to the processor 920. Coupling in this embodiment of this application may be indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. At least one of the at least one memory may be integrated with the processor.

In this embodiment of this application, the memory 930 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logic block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and software modules in the processor.

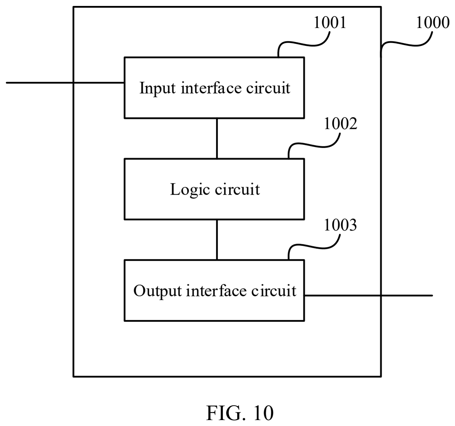

FIG. 10 shows a communication apparatus 1000 provided in an embodiment of this application. The communication apparatus 1000 is configured to implement the communication method provided in this application. The communication apparatus 1000 may be a communication apparatus that applies the communication method shown in embodiments of this application, a component in the communication apparatus, or an apparatus that can be used matching the communication apparatus. The communication apparatus 1000 may be a transmit end or a receive end. The communication apparatus 1000 may be a chip system or a chip. In this embodiment of this application, the chip system may include a chip, or may include a chip and another discrete component. Some or all in the communication methods provided in the foregoing embodiment may be implemented through hardware or software. When hardware is used for implementation, the communication apparatus 1000 may include: an input interface circuit 1001, a logic circuit 1002, and an output interface circuit 1003.

Optionally, using an example in which the apparatus is configured to implement a function of the receive end, the input interface circuit 1001 may be configured to perform the receiving action performed by the communication unit 820, the output interface circuit 1003 may be configured to perform the sending action performed by the communication unit 820, and the logic circuit 1002 may be configured to perform the action performed by the processing unit 1010. Details are not described again.

Optionally, the communication apparatus 1000 may be a chip or an integrated circuit in a specific implementation.

Some or all of operations and functions that are performed by the communication apparatus and that are described in the foregoing method embodiment of this application may be implemented by using the chip or the integrated circuit. An embodiment of this application provides a computer-readable storage medium, storing a computer program. The computer program includes instructions for implementing the foregoing method embodiment.

An embodiment of this application provides a computer program product including instructions. When the computer program product is run on a computer, the computer is enabled to perform the foregoing method embodiment.

An embodiment of this application provides a communication system. The communication system may include a first communication apparatus configured to implement the method shown in FIG. 5. For details, refer to related descriptions in the foregoing method embodiment. Details are not described herein again. The communication system may include the structure shown in FIG. 1.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specified function in one or more processes in the flowcharts and/or in one or more blocks in the block diagrams.

**Claims**

1. A communication method, applied to a non-terrestrial network communication system, and comprising:

    obtaining ephemeris information;
    determining grant free uplink transmission configuration information based on the ephemeris information and a first correspondence; and
    performing uplink transmission based on the uplink transmission configuration information.

2. The method according to claim 1, wherein determining the grant free uplink transmission configuration information based on the ephemeris information and the first correspondence comprises:

    determining non-terrestrial device information based on the ephemeris information, wherein the non-terrestrial device information comprises distance information and/or moment information, the distance information indicates a distance between a terminal performing uplink transmission and a non-terrestrial device, the moment information is determined based on uplink transmission moment information and reference moment information, and the reference moment information is comprised in the ephemeris information; and

determining the grant free uplink transmission configuration information based on the non-terrestrial device information and the first correspondence.

3. The method according to claim 2, wherein the non-terrestrial device information comprises the distance information, and determining the grant free uplink transmission configuration information based on the non-terrestrial device information and the first correspondence comprises:

querying the first correspondence based on the distance information, to determine the grant free uplink transmission configuration information.

4. The method according to claim 2, wherein the non-terrestrial device information comprises the moment information, and determining the grant free uplink transmission configuration information based on the non-terrestrial device information and the first correspondence comprises:

querying the first correspondence based on serving beam information and the moment information, to determine the grant free uplink transmission configuration information.

5. The method according to any one of claims 2 to 4, wherein the method further comprises:

receiving the first correspondence from a network device.

6. The method according to any one of claims 1 to 5, wherein the grant free uplink transmission configuration information comprises at least one of the following:

time-frequency resource location information;
a modulation and coding scheme;
a repetition number;
a power control parameter;
precoding scheme information;
uplink transmission waveform information;
an access scheme parameter corresponding to uplink transmission;
a parameter of a preamble signal;
time-frequency resource information of a preamble signal;
root sequence information of a preamble signal;
a subcarrier spacing;
a reference signal received power threshold;
a timing advance configuration; and
a time alignment timer configuration.

7. A communication apparatus, used in a non-terrestrial network communication system, comprising:

a processing unit, configured to: obtain ephemeris information, and determine grant free uplink transmission configuration information based on the ephemeris information and a first correspondence; and

a communication unit, configured to perform uplink transmission based on the uplink transmission configuration information.

8. The apparatus according to claim 7, wherein the processing unit is configured to:

determine non-terrestrial device information based on the ephemeris information, wherein the non-terrestrial device information comprises distance information and/or moment information, the distance information indicates a distance between a terminal performing uplink transmission and a non-terrestrial device, the moment information is determined based on uplink transmission moment information and reference moment information, and the reference moment information is comprised in the ephemeris information; and

determine the grant free uplink transmission configuration information based on the non-terrestrial device information and the first correspondence.

9. The apparatus according to claim 8, wherein the non-terrestrial device information comprises the distance information, and the processing unit is configured to:
query the first correspondence based on the distance information, to determine the grant free uplink transmission configuration information.

10. The apparatus according to claim 7, wherein the non-terrestrial device information comprises the moment information, and the processing unit is configured to:
query the first correspondence based on serving beam information and the moment information, to determine the grant free uplink transmission configuration information.

11. The apparatus according to any one of claims 8 to 10, wherein the communication unit is further configured to:
receive the first correspondence from a network device.

12. The apparatus according to any one of claims 7 to 11, wherein the grant free uplink transmission configuration information comprises at least one of the following:

time-frequency resource location information;
a modulation and coding scheme;
a repetition number;
a power control parameter;
precoding scheme information;
uplink transmission waveform information;
an access scheme parameter corresponding to uplink transmission;
a parameter of a preamble signal;
time-frequency resource information of a preamble signal;
root sequence information of a preamble signal;
a subcarrier spacing;
a reference signal received power threshold;
a timing advance configuration; and
a time alignment timer configuration.

13. A communication apparatus, comprising a processor, wherein when the communication apparatus runs, the processor is configured to execute computer program instructions, so that the communication apparatus performs the method according to any one of claims 1 to 6.

14. The apparatus according to claim 13, further comprising a memory and/or a transceiver, wherein the memory is configured to store the computer program instructions.

15. A communication apparatus, configured to perform the method according to any one of claims 1 to 6.

16. A chip system, wherein the chip system comprises a logic circuit and an input/output interface, wherein the input/output interface is configured to communicate with another communication apparatus other than the chip system, and the logic circuit is configured to perform the method according to any one of claims 1 to 6.

17. A computer-readable storage medium, wherein the computer-readable storage medium is configured to store computer program instructions, and when the computer program instructions are run on a computer, the computer is enabled to perform the method according to any one of claims 1 to 6.

18. A computer program product, wherein the computer program product comprises computer program instructions, and when the computer program instructions are run on a computer, the computer is enabled to perform the method according to any one of claims 1 to 6.

19. A communication system, comprising a sending apparatus and a receiving apparatus, wherein the sending apparatus is configured to perform the method according to any one of claims 1 to 6.

FIG. 1

FIG. 2

FIG. 3

FIG. 4

FIG. 5

FIG. 6A

FIG. 6B

FIG. 7A

Feedback link

Service link

FIG. 7B

Communication
apparatus 800

Processing unit 810

Communication unit 820

FIG. 8

900

910

Output interface

920

Processor

930

Memory

FIG. 9

FIG. 10

## INTERNATIONAL SEARCH REPORT

| International application No. |
| --- |
| **PCT/CN2023/073908** |

| A. | CLASSIFICATION OF SUBJECT MATTER |
| --- | --- |
| | H04W72/12(2023.01)i |

According to International Patent Classification (IPC) or to both national classification and IPC

| B. | FIELDS SEARCHED |
| --- | --- |

Minimum documentation searched (classification system followed by classification symbols)

    IPC: H04W,H04L

Documentation searched other than minimum documentation to the extent that such documents are included in the fields searched

Electronic data base consulted during the international search (name of data base and, where practicable, search terms used)

    CNTXT, ENTXT, CNABS, VEN, 3GPP: 波束, 对应关系, 非地面, 距离, 免动态, 授权, 激活, 上行, 传输, 配置, 时刻, 卫星, 星历, NTN, ephemeris, satellite, non 1w terrestrial, network, distance, correspond+, relevant, tim+, config+, transmit+, PDCCH, PDSCH, PUSCH, DCI, grant

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113396545 A (SONY CORPORATION) 14 September 2021 (2021-09-14) description, paragraphs [0045]-[0132] | 1-19 |
| X | CN 115189747 A (HUAWEI TECHNOLOGIES CO., LTD.) 14 October 2022 (2022-10-14) description, paragraphs [0191]-[0230] | 1-19 |
| A | CN 110971355 A (HUAWEI TECHNOLOGIES CO., LTD.) 07 April 2020 (2020-04-07) entire document | 1-19 |
| A | CN 111148258 A (CHINA ACADEMY OF INFORMATION AND COMMUNICATIONS TECHNOLOGY) 12 May 2020 (2020-05-12) entire document | 1-19 |
| A | US 2021014848 A1 (DAVYDOV ALEXEI et al.) 14 January 2021 (2021-01-14) entire document | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 October 2023** | **20 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/073908**

| Patent document cited in search report | | | Publication date (day/month/year) | Patent family member(s) | | | Publication date (day/month/year) |
|---|---|---|---|---|---|---|---|
| CN | 113396545 | A | 14 September 2021 | EP | 3925093 | A1 | 22 December 2021 |
| | | | | US | 2022109478 | A1 | 07 April 2022 |
| | | | | US | 11757504 | B2 | 12 September 2023 |
| | | | | WO | 2020165244 | A1 | 20 August 2020 |
| CN | 115189747 | A | 14 October 2022 | None | | | |
| CN | 110971355 | A | 07 April 2020 | WO | 2020063767 | A1 | 02 April 2020 |
| CN | 111148258 | A | 12 May 2020 | WO | 2020088603 | A1 | 07 May 2020 |
| US | 2021014848 | A1 | 14 January 2021 | US | 11671954 | B2 | 06 June 2023 |

Form PCT/ISA/210 (patent family annex) (July 2022)